# EUROPÄISCHE PATENTSCHRIFT

(11) **EP 4 048 563 B1**
(45) Veröffentlichungstag und Bekanntmachung des Hinweises auf die Patenterteilung: **06.12.2023**
(21) Anmeldenummer: 20797464.3
(22) Anmeldetag: 26.10.2020
(51) Int. Cl.: B60T 7/04, B60T 13/74

(54) **VERFAHREN ZUM BETREIBEN EINER BREMSANLAGE MIT EINER INTEGRIERTEN PARKBREMSE UND BREMSANLAGE**
METHOD TO USE A BRAKE SYSTEM WITH AN INTEGRATED PARKING BRAKE AND BRAKE SYSTEM
PROCEDE POU L'USAGE D'UN SYSTEME DE FREINAGE AVEC UN FREIN DE STATIONEMMENT INTEGRE ET SYSTEM DE FREINAGE

(30) Priorität: 24.10.2019 DE 102019216429
(43) Veröffentlichungstag der Anmeldung: 31.08.2022
(73) Patentinhaber: Continental Automotive Technologies GmbH, 30165 Hannover (DE)
(72) Erfinder: STANOJKOVSKI, Aleksandar, 60488 Frankfurt am Main (DE); BIEGLER, Serge, 60488 Frankfurt am Main (DE); WINTZER, Michael, 60488 Frankfurt am Main (DE)
(74) Vertreter: Continental Corporation
(86) Internationale Anmeldenummer: PCT/EP2020/080041
(87) Internationale Veröffentlichungsnummer: WO 2021/078997

(56) Entgegenhaltungen:
- DE-A1-102011 083 171
- DE-A1-102016 203 117

## Beschreibung

Die Erfindung betrifft ein Verfahren zum Betreiben einer Bremsanlage, welche umfasst
- hydraulisch betätigbare Radbremsen mit Bremsbelägen;
- einen Bremsflüssigkeitsbehälter;
- eine Druckbereitstellungseinrichtung mit einem in einen Druckraum verfahrbaren Druckkolben;
- eine integrierte Parkbremse,
wobei in einem Normalbetriebsmodus mit Hilfe der Druckbereitstellungseinrichtung aktiv Bremsdruck in den Radbremsen aufgebaut wird, und wobei in einer Parkbetriebsart die integrierte Parkbremse die Bremsbeläge von wenigstens zwei Radbremsen zuspannt, und wobei beim Lösen der integrierten Parkbremse das Zuspannen der Beläge wieder zurückgenommen wird.

Sie betrifft weiterhin eine entsprechende Bremsanlage.

Bremsanlagen können eine integrierte Parkbremse (IPB) aufweisen, welche beim Abstellen des Kraftfahrzeuges durch Förderung von Bremsflüssigkeit das Bremsflüssigkeitsvolumen in wenigstens zwei Radbremsen erhöht und dadurch den Radbremsdruck erhöht. Das Bremsflüssigkeitsvolumen wird bis zum Lösen der Parkbremse in den entsprechenden Radbremsen eingeschlossen. Beim Lösen der Parkbremse wird dieses zusätzliche Volumen frei.

Es gibt eine hydraulische Abhängigkeit zwischen der Parkbremse und der elektrohydraulischen Bremsanlage mit der Betriebsbremse. Die Aktuatoren beider Bremsen haben Einfluss auf das Bremsvolumen, wodurch Wechselwirkungen entstehen. Wenn die Parkbremse die Bremsbeläge einer Radbremse zuspannt, fließt Bremsflüssigkeit in die Radbremse nach. Das Bremsflüssigkeitsvolumen in der Radbremse erhöht sich somit.

Aus der DE 10 2011 083171 A1 ist dazu bekannt bei einer Übergabe von der Betriebsbremse an die Parkbremse die Volumenaufnahme und somit den Druckabfall im System, welcher die hydraulische Bremskraft an der Vorderachse verringern würde, zu vermeiden. Dazu ist vorgesehen während dieser Übergabe, den Druckabbau durch einen autonomen Druckaufbau zu kompensieren.

Wird die Parkbremse gelöst, wird dieses Volumen wieder frei und verlässt die Bremse.

Das allgemeine Problem ist, dass sich das durch die Parkbremse verschobene Volumen im hydraulischen Bremssystem verbreitet. Sind beispielweise bei den Rädern der Hinterachse die Einlassventile zu, während die Parkbremse gelöst wird, wirkt sich diese Volumenverschiebung direkt auf diesen Raddruck aus. Sofern die die Bremsanlage im "By-Wire"-Modus betrieben wird, in welchem die Trennventile, die die Druckbereitstellungseinrichtung vom Hauptbremszylinder trennen, geschlossen sind, wirkt sich dieses Volumen direkt auf die Druck-Volumen-Bilanz vom Systemdruck aus.

Dies führt konkret zu folgenden spezifischen Problemen. Das durch die Parkbremse verschobene Volumen wird von der Bremsanlage nicht berücksichtigt. Dadurch ergeben sich Probleme, weil das zusätzliche Volumen bei geschlossenen Trennventilen bzw. Zuschaltventilen, die die Druckbereitstellungseinrichtung von den Bremskreisen hydraulisch trennen, nicht von der Druckbereitstellungseinrichtung abgebaut werden kann. Ein Restdruckabbau über stromlos geschlossene Auslassventile der Radbremsen ist sehr laut und kann den Fahrer irritieren.

Das hydraulische Druckmodell kann eine wesentliche Eingangsgröße von der Raddruckregelung der Bremsanlage sein.

Das Druckmodel bestimmt, unter Berücksichtigung von Vordruck den Volumenstrom anhand von Schaltzeiten der Einlass- und Auslassventile, den Raddruck.

Da die integrierte Parkbremse als weiterer Aktuator in die Wirkkette am Rad eingreift, ist unter diesen Umständen das Druckmodell falsch. Beim Lösen der integrierten Parkbremse wird zusätzliches Bremsvolumen in das Rad bewegt. Die Folge ist, wenn die Einlassventile an diesem Rad geschlossen sind, ein Überbremsen des Rades, in manchen Fällen sogar ein Festbremsen des Fahrzeugs. Der Grund dafür ist, dass der Raddruckregler das von der integrierten Parkbremse injizierte Volumen nicht abbaut und die Hinterachse überbremst.

Eine Überlagerung vom Lösen der integrierten Parkbremse mit TCS (Traction Control System) führt zu nicht ermittelbaren Druckaufbauen an der Hinterachse, weil durch das TCS die Einlassventile an der Hinterachse geschlossen wurden. Das Druckmodell rechnet falsch, weil es die integrierte Parkbremse nicht als Aktuator bzw. Druckquelle berücksichtigt. Die Folge ist, dass der Raddruckregler das von der integrierten Parkbremse injizierte Volumen nicht abbaut und die Hinterachse überbremst.

Eine mögliche Lösung dieser Probleme ist, dass bei diesen Rädern die Auslassventile "blind" geöffnet werden, um den Restdruck abzubauen. Die Folge der "Blindheit" ist aber, dass die Druckwerte nicht den angeforderten Werten entsprechen.

Das durch die integrierte Parkbremse verschobene Volumen soll nicht zu Noise Vibration Harshness (NVH)-, Qualitätsproblemen oder Überbremsen führen.

Der Erfindung liegt daher die Aufgabe zugrunde, ein Verfahren zum Betreiben einer elektrohydraulischen Bremsanlage mit integrierter Parkbremse anzugeben, bei welchem die oben genannte Probleme reduziert oder ganz vermieden werden. Weiterhin soll eine entsprechende Bremsanlage angegeben werden. In Bezug auf das Verfahren wird diese Aufgabe erfindungsgemäß dadurch gelöst, dass nach dem Lösen der integrierten Parkbremse für den anschließenden Betrieb im Normalbetriebsmodus das in der Parkbremsbetriebsart durch die integrierte Parkbremse gegenüber dem Normalbetriebsmoduls zusätzlich verschobene Bremsflüssigkeitsvolumen berücksichtigt wird.

Vorteilhafte Ausgestaltungen der Erfindung sind Gegenstand der Unteransprüche.

Die Erfindung geht von der Erkenntnis aus, dass die oben beschriebenen Probleme vermieden werden können, indem das durch die integrierte Parkbremse verschobene Volumen in das hydraulische Bremssystem verrechnet wird. Dass das Volumen berücksichtigt wird bedeutet insbesondere, dass der Betrieb der Bremsanlage auf den vorhandenen Volumenüberschuss eingestellt wird und nicht ein oben beschriebenes "blindes" Ablassen von Bremsflüssigkeit durch die Auslassventile.

Vorteilhafterweise wird beim Aufwecken des Kraftfahrzeuges und/oder beim Rückfahren des Druckkolbens aus dem Druckraum bei aktivierter integrierter Parkbremse die anzufahrende Standby-Position des Druckkolbens der Druckbereitstellungseinrichtung um einen Kompensationsweg nach vorne in Richtung Druckraum vorverlegt, sodass das korrespondierende Volumen dem Parkbremsvolumen entspricht, wodurch in der Druckbereitstellungseinrichtung eine Volumenreserve geschaffen wird. Dies bedeutet insbesondere, dass der Druckkolben selbst in der Lage sein soll, das Bremsvolumen der Parkbremse bis zu Drucklosigkeit aufnehmen zu können.

Das Aufwecken bezeichnet hier insbesondere das versetzen der Bremsanlage in einen Zustand, in dem die Ventile schaltbereit sind und in einen Normalbetriebszustand übergegangen werden kann.

Das Rückfahren des Druckkolbens aus dem Druckraum erfolgt beispielsweise wenn der Fahrer ein Bremspedal löst, oder wenn eine fahrerunabhängige automatische Bremsung beendet wird.

Bevorzugt wird nach einem Lösen der integrierten Parkbremse bei geschlossener hydraulischer Verbindung zum Bremsflüssigkeitsbehälter, die ursprüngliche Standby-Position des Drucckolbens im Wesentlichen wieder angefahren.

Der Normalbetriebszustand entspricht insbesondere der Betriebsbremsfunktion während des Fahrens des Fahrzeuges. Der Kompensationsweg kann dabei durch einen Erfahrungswert gegeben sein, der insbesondere durch eine Reihe von Messungen ermittelt wurde, oder auch durch konkrete Messung von Größen, die ein Maß für das Bremsflüssigkeitsvolumen sind, beispielsweise Strömungsgeschwindigkeit, Strömungsquerschnitt und Strömungszeit, bestimmt werden.

In einer bevorzugten Ausführungsform wird das von der integrierten Parkbremse verschobene Bremsflüssigkeitsvolumen bestimmt und in wenigstens einer hinterlegten Druck-Volumen-Kennlinie der Bremsanlage berücksichtigt. Dies kann in Bezug auf die Bremsanlage global oder lokal erfolgen, wie unten erläutert wird. Die Bestimmung kann durch eine Berechnung erfolgen, es kann alternativ auch ein vorbestimmter Wert verwendet werden.

Das von der integrierten Parkbremse verschobene Bremsflüssigkeitsvolumen wird vorzugsweise im Druckmodel der jeweiligen Radbremse berücksichtigt. Es wird somit lokal in jeder Radbremse in dessen Druck/Volumen-Kennlinie berücksichtigt.

Dazu wird vorteilhafterweise wenigstens eine der Radbremsgrößen berücksichtigt aus der Gruppe: Vordruck, Satteldimension, Einlassventilzustand, Trennventilzustand, Auslassventilzustand.

Wenn das Druckmodell einen Bremsflüssigkeitsüberschuss in einer Radbremse anzeigt, wird vorzugsweise in dieser Radbremse durch Öffnen eines Auslassventils der Radbremsruck verringert wird, sodass der Überschuss an Bremsflüssigkeit abgebaut.

In einer bevorzugten Ausführungsform wird das von der integrierten Parkbremse verschobene Bremsflüssigkeitsvolumen berechnet und in eine hinterlegte Druck-Volumen-Kennlinie hineingerechnet, wobei mit Hilfe dieser verglichen wird, und wobei bei einer Überwachung von Radvolumenabweichungen diese neue Druck-Volumen-Kennlinie verwendet wird. Diese Druck-Volumen-Kennlinie betrifft vorzugsweise den von der Druckbereitstellungseinrichtung bereitgestellten Systemdruck, der zu dem in dem Druckraum der Druckbereitstellungseinrichtung herrschenden Druck korrespondiert.

In Bezug auf die Bremsanlage wird die oben genannte Aufgabe erfindungsgemäß gelöst mit einer Steuer- und Regeleinheit, in der ein oben beschriebenes Verfahren hardware- und/oder softwareseitig implementiert ist.

In einer bevorzugten Ausführungsform ist ein Bremspedal vorgesehen, welches durch eine Pedalkoppelstange mit einem Druckkolben des Hauptbremszylinders gekoppelt ist. Der Fahrer kann in diesem Fall in einer Rückfallebene durch Muskelkraft Bremsdruck in den Radbremsen aufbauen. Im Normalbetrieb ("by Wire") wird bei Betätigung des Bremspedals ein Simulator betätigt und über eine Fahrerbremswunscherfassung, insbesondere einen Pedalwegsensor, wird der Fahrerbremswunsch erfasst. In anderen bevorzugten Ausführungsformen ist das Bremspedal nicht mechanisch mit dem Hauptbremszylinder gekoppelt. Der Fahrerbremswunsch wird mit Hilfe der Fahrerbremswunscherfassung erfasst und dann by Wire (als Signal) an die Steuer- und Regeleinheit übermittelt. Die Bremsanlage umfasst somit bevorzugt ein Bremspedal, welches mit dem Hauptbremszylinder mechanisch gekoppelt sein kann oder ausschließlich by Wire angebunden ist.

Die Bremsanlage kann auch, ohne dass ein Fahrerbremswunsch vorliegt, Bremsungen durchführen, beispielsweise im Rahmen einer Abstandsregelung.

Die Vorteile der Erfindung liegen insbesondere darin, dass die ungewollten Auswirkungen von IPB-Aktivitäten kompensiert werden können, bevor diese zu NVH-Problemen führen. Besonders vorteilhaft ist dabei, dass die vorhandenen Funktionen und Regelketten nicht modifiziert werden müssen.

Durch die Berücksichtigung des von der integrierten Parkbremse verschobenen Volumens kann die Park- bzw. Standby-Position des Druckkolbens bzw. LAC neu ermittelt werden. Dadurch ist beim Übergang zum By-Wire-Modus der Bremsanlage nicht mehr notwendig, Restvolumen durch Ventilaktivierung abzubauen.

In dem Fall, dass die Hinterachse durch das TCS drucklos gehalten wird, kann das verschobene Volumen auf die Druckmodelle von den Hinterrädern gerechnet werden. Der durch die integrierte Parkbremse verursachte Druckaufbau kann durch den Radregler genau kompensiert werden.

Ein Ausführungsbeispiel der Erfindung wird anhand einer Zeichnung näher erläutert. Darin zeigen in stark schematisierter Darstellung:
- FIG. 1: ein Diagramm einer Anforderung einer integrierten Parkbremse;
- FIG. 2: ein hydraulisches Schaltbild einer Bremsanlage in einer bevorzugten Ausführungsform;
- FIG. 3: ein Schaubild eines Verfahrens in einer ersten bevorzugten Ausführungsform;
- FIG. 4: ein Schaubild eines Verfahrens in einer ersten bevorzugten Ausführungsform, und
- FIG. 5: ein Schaubild eines Verfahrens in einer ersten bevorzugten Ausführungsform.

Gleiche Teile sind in allen Figuren mit denselben Bezugszeichen versehen.

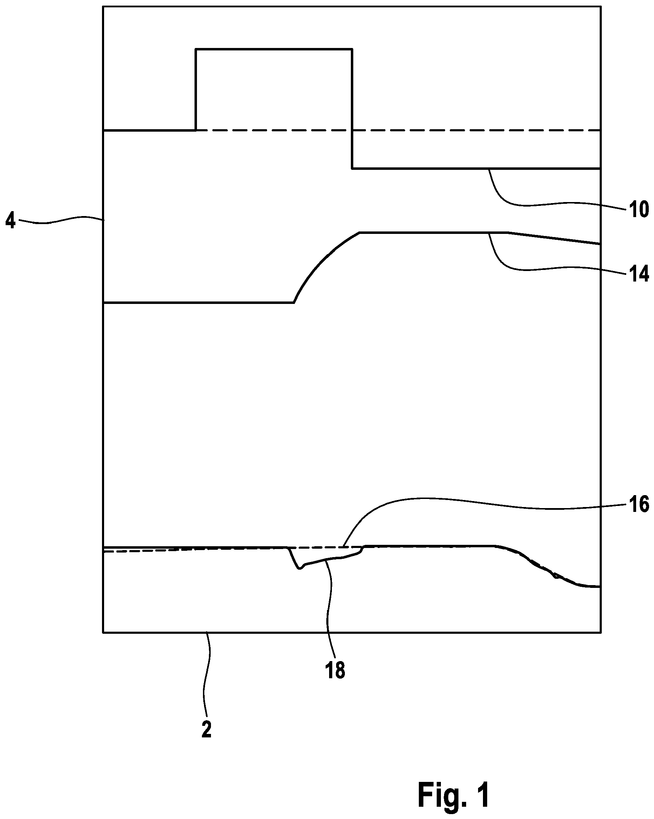

In FIG. 1 ist in einem Diagramm beispielhaft eine Anforderung einer integrierten Parkbremse dargestellt. Auf der Abszissenachse 2 ist die Zeit abgetragen. Auf der Ordinate ist oben als eine Kurve 10 ein Signal-Flag abgetragen, welches eine Anforderung eines Spannvorganges der integrierten Parkbremse repräsentiert, und in der Mitte eine Druckkolbenposition und unten der Systemdruck abgetragen.

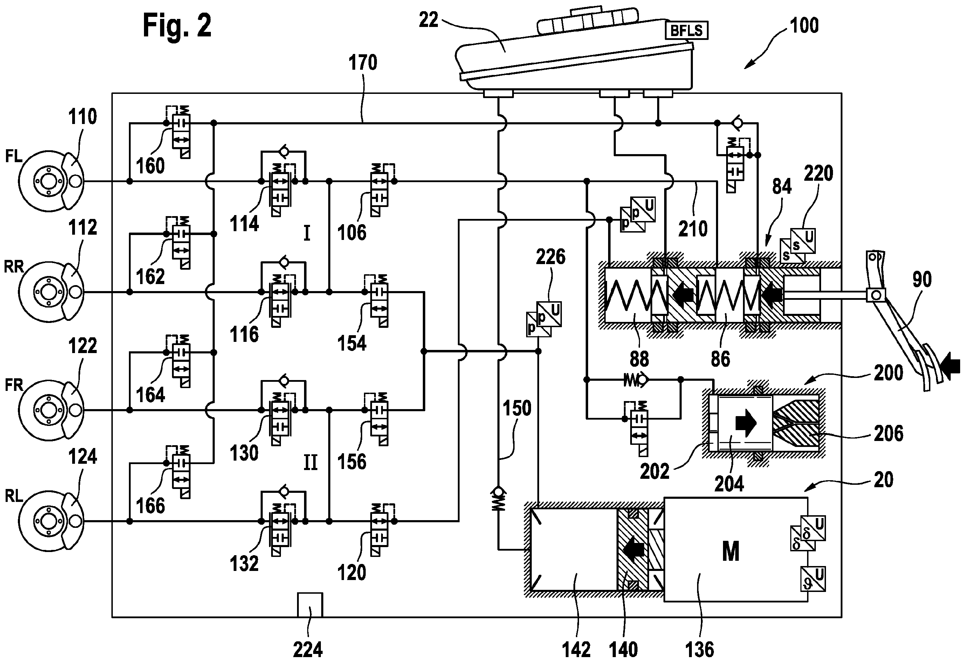

Der Verlauf des Ist-Drucks, dargestellt durch eine Kurve 18, zeigt den Einfluss der IPB auf eine Bremsanlage, wie sie in FIG. 2 dargestellt ist. Als Folge der Volumenverschiebung durch den Spannvorgang durch die IPB muss der Druckkolben bzw. der LAC vorfahren (siehe Kurve 14) um das durch die IPB verschobene Bremsvolumen zu kompensieren. In diesem Beispiel musste der LAC die Position um 4mm verändern. Das entspricht einer Volumenverschiebung von ca. 1,2 cm³. Bevor der LAC-Reaktion betrug der Druckeinbruch ca. 2,5 bar. Eine Kurve 16 repräsentiert dabei den Sollsystemdruck, während eine Kurve 18 den Ist-Druck repräsentiert.

In FIG. 2 ist eine Bremsanlage 100 in einer bevorzugten Ausführung dargestellt.

Die Bremsanlage 100 umfasst einen Hauptbremszylinder 84 mit zwei Druckräumen 86, 88. Der Hauptbremszylinder 84 wird über ein Bremspedal 90 vom Fahrer des Kraftfahrzeugs betätigt. Der Hauptbremszylinder 84 ist an einen Druckmittelvorratsbehälter bzw. Bremsflüssigkeitsbehälter 22 angeschlossen und wird aus diesem mit Druckmittel versorgt. Dabei verfügt jeder der Druckräume 86, 88 über einen eigenen Anschluss an den Druckmittelvorratsbehälter 2.

Der erste Druckraum 86 des Hauptbremszylinders 84 ist über ein erstes Trennventil 106 mit einem ersten Bremskreis I verbunden, an welchen eine erste und eine zweite Radbremse 110, 112 angeschlossen sind. Das erste Trennventil 106 ist beispielsgemäß stromlos offen ausgeführt. Zweckmäßigerweise sind die erste und zweite Radbremse 110, 112 dabei über je ein Einlassventil 114, 116 angeschlossen.

Der zweite Druckraum 88 des Hauptbremszylinders 84 ist über ein zweites Trennventil 120 mit einem zweiten Bremskreis II verbunden, an welchen eine dritte und eine vierte Radbremse 122, 124 angeschlossen sind. Das zweite Trennventil 120 ist beispielsgemäß stromlos offen ausgeführt. Zweckmäßigerweise sind die dritte und vierte Radbremse 122, 124 dabei über je ein Einlassventil 130, 132 angeschlossen.

Die Bremsanlage 100 besitzt eine Druckbereitstellungseinrichtung 20, die als Linearaktuator (LAC) ausgebildet ist. Die Druckbereitstellungseinrichtung 20 umfasst beispielsgemäß einen Motor 136, mittels dessen über ein Rotations-Translationsgetriebe 144 ein Druckkolben 140 in einem hydraulischen Druckbereitstellungseinrichtungs-Druckraum 142 verschoben werden kann, wodurch ein Systemdruck aufgebaut werden kann. Die Druckbereitstellungseinrichtung 20 ist über eine Verbindung 150 an den Bremsflüssigkeitsbehälter 22 angeschlossen und wird aus diesem mit Druckmittel versorgt.

Die Druckbereitstellungseinrichtung 20 ist beispielsgemäß über ein erstes Zuschaltventil 154 mit der ersten und zweiten Radbremse 110, 112 trennbar verbunden und über ein zweites Zuschaltventil 156 mit der dritten und der vierten Radbremse 122, 124 trennbar verbunden.

Die Bremsanlage 100 kann beispielsgemäß in einem Normalbetrieb betrieben werden, der einem sog. "By-Wire"-Betrieb entspricht. Im Normalbetrieb werden das erste und das zweite Trennventil 114, 132 geschlossen, so dass der Hauptbremszylinder 84 von den Radbremsen 110, 112, 122, 124 entkoppelt ist. Die Zuschaltventile 154, 156 werden geöffnet, und Druck in den Radbremsen wird durch die Druckbereitstellungseinrichtung 20 erzeugt. Die Bremsanlage 100 umfasst einen Pedalgefühlsimulator 200 mit einer hydraulischen Simulatorkammer 202, einen Simulatorkolben 204 und einem elastischen Element 206. Die Simulatorkammer ist im By-Wire-Modus hydraulisch trennbar durch eine Leitung 210 mit der Kammer 86 (Primärkammer) des Hauptbremszylinders 84 verbunden. Im Brake-by-Wire-Modus wird durch einen Pedalwegsensor 220 der Bremswunsch des Fahrers erfasst. Eine Steuer- und Regeleinheit 224 stellt dementsprechend den Systemdruck, der durch einen Systemdrucksensor 226 gemessen wird, ein.

Ein Druckaufbau durch die Druckbereitstellungseinrichtung 20 kann im Normalbetrieb auch unabhängig von einer Betätigung des Bremspedals 90 durchgeführt werden. Radbremsdruck kann durch Öffnen von Auslassventilen 160, 162, 164, 166, über welche die Radbremsen 110, 112, 122, 124 mit einer gemeinsamen Rücklaufleitung 170 und darüber mit dem Druckmittelvorratsbehälter 2 verbunden sind, aus den Radbremsen 110, 112, 122, 124 abgebaut werden. Alternativ können getrennte Rücklaufleitungen vorgesehen sein (nicht dargestellt), wobei vorteilhafterweise die erste und zweite Radbremse 110, 112 an eine erste Rücklaufleitung angeschlossen sind und die dritte und vierte Radbremse 122, 124 an eine zweite Rücklaufleitung angeschlossen sind. Die Rücklaufleitungen sind an unterschiedliche Kammern des Bremsflüssigkeitsbehälters 2 angeschlossen.

Die Einlassventile 114, 116, 130, 132 sind einzeln schaltbar zum Einstellen unterschiedlicher Drücke in den Radbremsen. Es können mit der Bremsanlage 100 an sich bekannte Brems-Regelfunktionen durchgeführt werden (bspw. EBV, ABS, ASR, ESC, ACC, etc.).

Die Bremsanlage 100 kann in einem ersten Rückfallbetriebsmodus betrieben werden. Hierzu wird beispielsgemäß die Druckbereitstellungseinrichtung 20 von den Radbremsen 110, 112, 122, 124 getrennt, indem die Zuschaltventile 154, 156 geschlossen werden. Der Hauptbremszylinder 84 wird mit den Radbremsen 110, 112, 122, 124 hydraulisch verbunden, indem die Trennventile 106, 120 geöffnet werden, so dass Bremsdruck in den Radbremsen 110, 112, 122, 124 durch den Hauptbremszylinder 84 bereitgestellt wird. Die Druckbereitstellungseinrichtung 20 wird hierbei nicht zum Druckaufbau verwendet.

Weiter kann die Bremsanlage 100 auch in einem zweiten Rückfallbetriebsmodus betrieben werden, in dem beispielsgemäß der Hauptbremszylinder 84 von den Radbremsen 110, 112, 122, 124 durch Schließen der Trennventile 106, 120 getrennt wird und die Druckbereitstellungseinrichtung 20 mit zumindest einem Teil der Radbremsen verbunden wird, indem das erste Zuschaltventil 154 und/oder das zweite Zuschaltventil 156 geöffnet wird. Bremsdruck zur Betätigung des Teils der Radbremsen wird durch die Druckbereitstellungseinrichtung 20 bereitgestellt.

Dabei wird Bremsdruck in der ersten und zweiten Radbremse 110, 112 durch die Druckbereitstellungseinrichtung 20 bereitgestellt, indem das erste Zuschaltventil 154 geöffnet wird, oder Bremsdruck in der dritten und vierten Radbremse 122, 124 durch die Druckbereitstellungseinrichtung 20 bereitgestellt, indem das zweite Zuschaltventil 156 geöffnet wird, oder Druck in allen vier Radbremsen bereitgestellt, indem sowohl das erste als auch das zweite Zuschaltventil 154, 156 geöffnet werden. Je nach Ausführung der Zuschaltventile kann es vorteilhaft sein, mit einem Zuschaltventil zugleich die jeweils zugehörigen Einlassventile zu schließen. Vorteilhaft ist das insbesondere dann, wenn ein Druck in der Druckbereitstellungseinrichtung 20 öffnend auf die Zuschaltventile wirkt.

Die erste und zweite Radbremse 110, 112 sind beispielsgemäß an unterschiedlichen Fahrzeugseiten angeordnet, vorteilhafterweise auf einer Diagonalen. Dementsprechend sind die dritte und vierte Radbremse 122, 124 auch auf unterschiedlichen Fahrzeugseiten angeordnet. Beispielsweise handelt es sich bei der dritten Radbremse 122 um die vordere rechte Radbremse (FR), bei der vierten Radbremse 124 um die hintere linke (RL) Radbremse, bei der ersten Radbremse 110 um die vordere linke Radbremse (FL), und bei der zweiten Radbremse 112 um die hintere rechte Radbremse (RR). Andere Anordnungen sind ebenfalls möglich.

Die Bremsanlage 100 weist eine integrierte Parkbremse auf. Die integrierte Parkbremse umfasst jeweils elektromechanische Aktuatoren in den Hinterradbremsen 112, 124, welche dazu ausgebildet sind, bedarfsweise die Bremsbeläge der jeweiligen Radbremse 112, 124 zu spannen und wieder zu lösen. Die Parkbremse ist somit in die jeweilige Radbremse integriert und wird daher mit den gleichen Bezugszeichen 112, 124 bezeichnet.

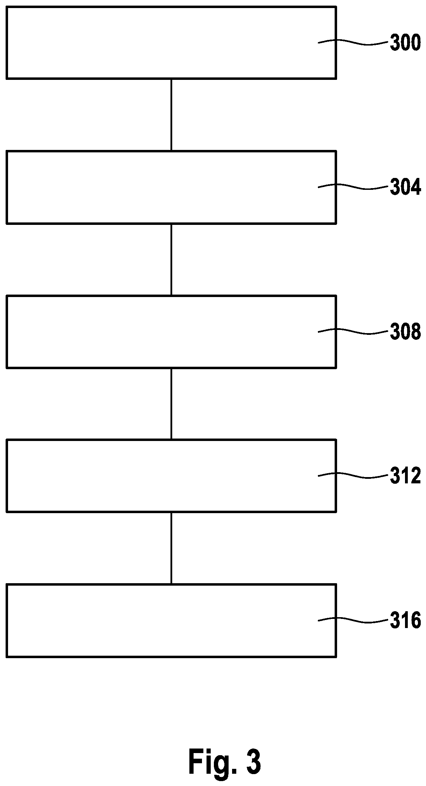

In FIG. 3 ist ein Verfahren zum Betreiben der Bremsanlage 100 eines Kraftfahrzeuges in einer ersten bevorzugten Ausführungsform. Das Kraftfahrzeug befindet sich in einem Zustand mit eingelegter bzw. aktivierter/gespannter integrierter Parkbremse (IPB). In einem Block 300 wird das Kraftfahrzeug aufgeweckt.

In einem Block 304 wird das von der integrierten Parkbremse verschobene Volumen berechnet. Daraus wird ein Verfahrweg des Druckkolbens 140 der Druckbereitstellungseinheit 20 berechnet, der zu einer neuen Standby- oder Parkposition des Druckkolbens 140 korrespondiert.

In einem Block 308 wird der Druckkolben 140 zu der neu berechneten Standby-Position vorgefahren. Dabei verschiebt er das in Block 304 berechnete Volumen in den Bremsflüssigkeitsbehälter 22.Dies erfolgt bei einer hydraulischen Verbindung des Druckraumes 142 mit dem Behälter 22.

In einem Block 312 wird gewartet, bis der Fahrer das Bremspedal 90 tritt und die integrierte Parkbremse löst.

Sofern dies geschehen ist, wird in einem Block 316 darauf gewartet, dass der Fahrer das Bremspedal 90 wieder löst. Sobald dies erfolgt, wird der Druckkolben 140 wieder in die ursprüngliche Standby-Position gefahren. Da durch das Verfahrens des Druckkolbens 140 zur neuen Standby-Position ein Bremsflüssigkeitsvolumen in den Behälter verschoben wird, welches genau dem Bremsflüssigkeitsvolumen entspricht, welches nach Lösen der integrierten Parkbremse aus den Radbremsen in das Bremssystem eingespeist wird, kann die Bremsanlage wieder mit dem ursprünglichen Volumen an Bremsflüssigkeit betrieben werden. Ein "blindes" Ablassen von Bremsflüssigkeit nach Lösen der integrierten Parkbremse ist nicht notwendig.

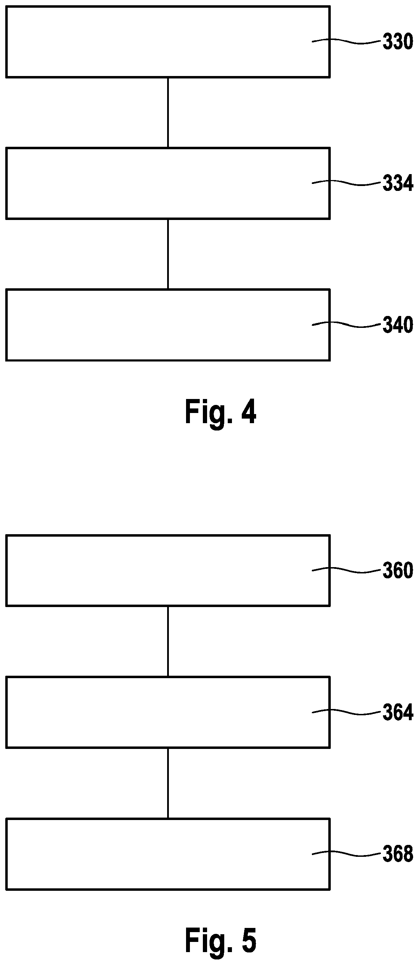

In FIG. 4 ist ein Verfahren in einer zweiten bevorzugten Ausführungsform dargestellt. In einem Block 330 wird das von der integrierten Parkbremse verschobene Volumen berechnet. In einem darauffolgenden Block 334 wird das von der Parkbremse verschobene Bremsflüssigkeitsvolumen im Druckmodel der jeweiligen Radbremse berücksichtigt. Dabei werden insbesondere Korrekturen im Druckmodel vorgenommen zu einem oder mehreren der folgenden Größen: Druck-Volumen-Kennlinie, Vordruck, Satteldimension, Einlassventilzustand, Trennventil-Parameter.

In einem Block 340 wird, sofern das Druckmodell nun einen Volumenüberschuss in der entsprechenden Radbremse 110, 112, 122, 124 anzeigt bzw. wenn sich aus der Auswertung des Druckmodell ein Volumenüberschuss ergibt, das entsprechende Auslassventil 160, 162, 164, 166 geöffnet und das Radbremsruck dadurch verringert.

Als Beispiel hat die Radbremse 112 (RR) einen Soll- und Ist-druck von 5 bar und das Einlassventil 116 dieser Radbremse 112 ist geschlossen, weil ein Vordruck von 15 bar anliegt. Durch die IPB werden 0,75 cm³ in diese Radbremse 112 verschoben. Dieses Zusatzvolumen würde laut PV-Kennlinie einen Druckanstieg auf 20 bar zur Folge haben. Durch eine hydraulische Verbindung mit Rückschlagventil würde sich der Druck in der Radbremse 112 und der Systemdruck (d. h. der Druck in Druckraum 142) in diesem Fall angleichen, sodass in der Radbremse 112 15 bar anliegen. Der Raddruckregler der Steuer- und Regeleinheit 224 würde 10 bar zu viel im Rad sehen und über die Auslassventilaktivierung den Druck abbauen.

In FIG. 5 ist ein Verfahren in einer dritten bevorzugten Ausführungsform dargestellt.

In einem Block 360 wird das von der integrierten Parkbremse verschobene Volumen berechnet und in eine hinterlegte Druck-Volumen-Kennlinie (P-V-Kennlinie) hineingerechnet. In einem darauffolgenden Block 364 wird die neu berechnete mit der hinterlegten Kennlinie verglichen.

In einem Block 368 wird bei einer Überwachung von Radvolumenabweichungen (Volume Deviation Monitoring - VDM) die neue (angepasste) Druck-Volumen-Kennlinie verwendet.

## Patentansprüche

1. Verfahren zum Betreiben einer Bremsanlage (100), welche umfasst
• hydraulisch betätigbare Radbremsen (110, 112, 122, 124) mit Bremsbelägen;
• einen Bremsflüssigkeitsbehälter (22);
• eine Druckbereitstellungseinrichtung (20) mit einem in einen Druckraum (142) verfahrbaren Druckkolben (140);
• eine in die Radbremse integrierte Parkbremse (112, 124),
wobei in einem Normalbetriebsmodus mit Hilfe der Druckbereitstellungseinrichtung (22) aktiv Bremsdruck in den Radbremsen (110, 112, 122, 124) aufgebaut wird, und wobei in einer Parkbetriebsart die integrierte Parkbremse (112, 124) die Bremsbeläge von wenigstens zwei Radbremsen (110, 112, 122, 124) zuspannt, und wobei beim Lösen der integrierten Parkbremse das Zuspannen der Beläge wieder zurückgenommen wird,
**dadurch gekennzeichnet, dass**
nach dem Lösen der integrierten Parkbremse (112, 124) für den anschließenden Betrieb im Normalbetriebsmodus das in der Parkbremsbetriebsart durch die integrierte Parkbremse gegenüber dem Normalbetriebsmodus zusätzlich verschobene Bremsflüssigkeitsvolumen berücksichtigt wird.

2. Verfahren nach Anspruch 1, wobei beim Aufwecken des Kraftfahrzeuges und/oder beim Rückfahren des Druckkolbens aus dem Druckraum bei aktivierter integrierter Parkbremse eine anzufahrende Standby-Position des Druckkolbens (140) der Druckbereitstellungseinrichtung (20) um einen Kompensationsweg nach vorne in Richtung Druckraum (142) vorverlegt wird, sodass das korrespondierende Volumen dem Parkbremsvolumen entspricht.

3. Verfahren nach Anspruch 2, wobei nach einem Lösen der integrierten Parkbremse bei geschlossener hydraulischer Verbindung zum Bremsflüssigkeitsbehälter, die ursprüngliche Standby-Position des Druckkolbens im Wesentlichen wieder angefahren wird.

4. Verfahren nach Anspruch 1 oder 2, wobei das von der integrierten Parkbremse verschobene Bremsflüssigkeitsvolumen bestimmt wird und in wenigstens einer hinterlegten Druck-Volumen-Kennlinie der Bremsanlage (100) berücksichtigt wird.

5. Verfahren nach Anspruch 3, wobei das von der integrierten Parkbremse verschobene Bremsflüssigkeitsvolumen im Druckmodel der jeweiligen Radbremse (110, 112, 122, 124) in dessen Druck-Volumen-Kennlinie berücksichtigt wird.

6. Verfahren nach Anspruch 4, wobei dazu wenigstens eine der Radbremsgrößen berücksichtigt wird aus der Gruppe: Vordruck, Satteldimension, Einlassventilzustand, Trennventilzustand, Auslassventilzustand.

7. Verfahren nach Anspruch 4 oder 5, wobei, wenn das Druckmodell einen Bremsflüssigkeitsüberschuss in einer Radbremse (110, 112, 122, 124) anzeigt, in dieser Radbremse (110, 112, 122, 124) durch Öffnen eines Auslassventils (160, 162, 164, 166) der Radbremsdruck verringert wird, sodass der Überschuss an Bremsflüssigkeit abgebaut wird.

8. Verfahren nach Anspruch 3, wobei das von der integrierten Parkbremse verschobene Bremsflüssigkeitsvolumen berechnet und in eine hinterlegte Druck-Volumen-Kennlinie hineingerechnet wird, und wobei bei einer Überwachung von Radvolumenabweichungen diese neue Druck-Volumen-Kennlinie verwendet wird.

9. Bremsanlage (100), umfassend
• hydraulisch betätigbare Radbremsen (110,112, 122, 124);
• einen Bremsflüssigkeitsbehälter (22);
• eine Druckbereitstellungseinrichtung (20) mit einem in einen Druckraum (142) verfahrbaren Druckkolben (140);
• eine in die Radbremse integrierte Parkbremse (112, 124),
weiterhin umfassend eine Steuer- und Regeleinheit (224), in der ein Verfahren nach einem der vorherigen Ansprüche hardware- und/oder softwareseitig implementiert ist.

10. Bremsanlage (100) nach Anspruch 9, wobei die Druckbereitstellungseinrichtung (20) als Linearaktuator ausgebildet ist und einen Elektromotor (136) aufweist sowie ein Rotations-Translations-Getriebe (144) zur Umwandlung einer Motorrotation in eine translatorische Bewegung des Druckkolbens (140) .

11. Bremsanlage nach Anspruch 10, wobei das Rotations-Translationsgetriebe (140) als Kugelgewindetrieb ausgebildet ist.

## Claims

1. Method for operating a brake system (100), which comprises
• hydraulically actuatable wheel brakes (110, 112, 122, 124) with brake linings;
• a brake fluid reservoir (22);
• a pressure supply device (20) with a pressure piston (140) that can be moved into a pressure chamber (142);
• a parking brake (112, 124) integrated into the wheel brake,
wherein, in a normal operating mode, brake pressure is actively built up in the wheel brakes (110, 112, 122, 124) by means of the pressure supply device (22), and wherein, in a parking operating mode, the integrated parking brake (112, 124) applies the brake linings of at least two wheel brakes (110, 112, 122, 124), and where-in, when the integrated parking brake is released, the application of the linings is withdrawn again,
**characterized in that**,
after the integrated parking brake (112, 124) has been released, the brake fluid volume additionally displaced in the parking brake operating mode by the integrated parking brake with respect to the normal operating mode is taken into consideration for the subsequent operation in the normal operating mode.

2. Method according to Claim 1, wherein, when the motor ve-hicle is woken up and/or when the pressure piston is moved back out of the pressure chamber with the integrated parking brake activated, a standby position to be assumed by the pres-sure piston (140) of the pressure supply device (20) is ad-vanced in the direction of the pressure chamber (142) by a compensation travel such that the corresponding volume corre-sponds to the parking brake volume.

3. Method according to Claim 2, wherein, after the integrat-ed parking brake has been released with the hydraulic connec-tion to the brake fluid reservoir closed, the original standby position of the pressure piston is substantially assumed again.

4. Method according to Claim 1 or 2, wherein the brake fluid volume displaced by the integrated parking brake is determined and is taken into consideration in at least one stored pres-sure-volume characteristic curve of the brake system (100).

5. Method according to Claim 3, wherein the brake fluid vol-ume displaced by the integrated parking brake is taken into consideration in the pressure model of the respective wheel brake (110, 112, 122, 124) in the pressure-volume characteris-tic curve thereof.

6. Method according to Claim 4, wherein, for this purpose, at least one of the wheel brake variables from the following group is taken into consideration: admission pressure, caliper dimension, inlet valve state, isolation valve state, outlet valve state.

7. Method according to Claim 4 or 5, wherein, if the pres-sure model indicates an excess of brake fluid in a wheel brake (110, 112, 122, 124), the wheel brake pressure in this wheel brake (110, 112, 122, 124) is reduced by virtue of an outlet valve (160, 162, 164, 166) being opened, such that the excess of brake fluid is depleted.

8. Method according to Claim 3, wherein the brake fluid vol-ume displaced by the integrated parking brake is calculated and is incorporated into a stored pressure-volume characteris-tic curve, and wherein this new pressure-volume characteristic curve is used in monitoring of wheel volume deviations.

9. Brake system (100), comprising
• hydraulically actuatable wheel brakes (110, 112, 122, 124);
• a brake fluid reservoir (22);
• a pressure supply device (20) with a pressure piston (140) that can be moved into a pressure chamber (142);
• a parking brake (112, 124) integrated into the wheel brake,
furthermore comprising an open-loop and closed-loop control unit (224), in which a method according to any of the preced-ing claims is implemented in hardware and/or software.

10. Brake system (100) according to Claim 9, wherein the pressure supply device (20) is configured as a linear actuator and has an electric motor (136) and a rotation-translation mechanism (144) for converting a motor rotation into a translational movement of the pressure piston (140).

11. Brake system according to Claim 10, wherein the rotation-translation mechanism (140) is configured as a ball screw drive.

## Revendications

1. Procédé d'exploitation d'un système de freinage (100), qui comprend
- des freins de roue actionnables hydrauliquement (110, 112, 122, 124) avec des garnitures de frein ;
- un réservoir de liquide de frein (22) ;
- un dispositif de fourniture de pression (20) avec un piston de pression (140) déplaçable dans une chambre de pression (142) ;
- un frein de stationnement (112, 124) intégré dans le frein de roue,
dans lequel, dans un mode d'exploitation normal, la pression de freinage est activement créée dans les freins de roue (110, 112, 122, 124) à l'aide du dispositif de fourniture de pression (22), et dans lequel, dans un mode d'exploitation de stationnement, le frein de stationnement intégré (112, 124) serre les garnitures de frein d'au moins deux freins de roue (110, 112, 122, 124), et dans lequel, lors du relâchement du frein de stationnement intégré, le serrage des garnitures est de nouveau supprimé,
**caractérisé en ce**
**qu'**après le relâchement du frein de stationnement intégré (112, 124), le volume de liquide de frein déplacé de manière supplémentaire dans le mode d'exploitation de frein de stationnement par le frein de stationnement intégré par rapport au mode d'exploitation normal est pris en compte pour l'exploitation ultérieure dans le mode d'exploitation normal.

2. Procédé selon la revendication 1, dans lequel, lors du réveil du véhicule automobile et/ou lors du retour du piston de pression hors de la chambre de pression lorsque le frein de stationnement intégré est activé, une position d'attente à atteindre du piston de pression (140) du dispositif de fourniture de pression (20) est avancée d'une distance de compensation vers l'avant en direction de la chambre de pression (142), de telle sorte que le volume correspondant correspond au volume du frein de stationnement.

3. Procédé selon la revendication 2, dans lequel, après un relâchement du frein de stationnement intégré alors que la liaison hydraulique avec le réservoir de liquide de frein est fermée, la position d'attente initiale du piston de pression est essentiellement rétablie.

4. Procédé selon la revendication 1 ou 2, dans lequel le volume de liquide de frein déplacé par le frein de stationnement intégré est déterminé et pris en compte dans au moins une courbe caractéristique pression-volume enregistrée du système de freinage (100).

5. Procédé selon la revendication 3, dans lequel le volume de liquide de frein déplacé par le frein de stationnement intégré est pris en compte dans le modèle de pression du frein de roue respectif (110, 112, 122, 124) dans sa courbe caractéristique pression-volume.

6. Procédé selon la revendication 4, dans lequel au moins l'une des grandeurs de frein de roue est prise en compte pour cela parmi le groupe : pression préalable, dimension de l'étrier, état de la soupape d'admission, état de la soupape de séparation, état de la soupape d'échappement.

7. Procédé selon la revendication 4 ou 5, dans lequel, lorsque le modèle de pression indique un excès de liquide de frein dans un frein de roue (110, 112, 122, 124), la pression de frein de roue dans ce frein de roue (110, 112, 122, 124) est réduite en ouvrant une soupape d'échappement (160, 162, 164, 166), de telle sorte que l'excès de liquide de frein est diminué.

8. Procédé selon la revendication 3, dans lequel le volume de liquide de frein déplacé par le frein de stationnement intégré est calculé et inclus dans une courbe caractéristique pression-volume enregistrée, et dans lequel cette nouvelle courbe caractéristique pression-volume est utilisée lors d'un contrôle des écarts de volume de roue.

9. Système de freinage (100), comprenant
- des freins de roue actionnables hydrauliquement (110, 112, 122, 124) ;
- un réservoir de liquide de frein (22) ;
- un dispositif de fourniture de pression (20) avec un piston de pression (140) déplaçable dans une chambre de pression (142) ;
- un frein de stationnement (112, 124) intégré dans le frein de roue,
comprenant en outre une unité de commande et de régulation (224), dans laquelle un procédé selon l'une des revendications précédentes est mis en oeuvre du côté du matériel et/ou du côté du logiciel.

10. Système de freinage (100) selon la revendication 9, dans lequel le dispositif de fourniture de pression (20) est réalisé sous forme d'actionneur linéaire et présente un moteur électrique (136) ainsi qu'une transmission rotation/translation (144) pour convertir une rotation du moteur en un mouvement de translation du piston de pression (140).

11. Système de freinage selon la revendication 10, dans lequel la transmission rotation/translation (140) est une vis d'entraînement à billes.
